# EUROPÄISCHE PATENTSCHRIFT

(11) **EP 1 366 941 B1**
(45) Veröffentlichungstag und Bekanntmachung des Hinweises auf die Patenterteilung: **22.11.2006**
(21) Anmeldenummer: 03005250.0
(22) Anmeldetag: 10.03.2003
(51) Int. Cl.: B60J 7/057, H02P 3/00

(54) **Verfahren und Vorrichtung zum Öffnen und Schliessen einer Öffnung**
Method and device for the opening and closing of an aperture
Procédé et dispositif pour ouvrir et fermer une ouverture

(30) Priorität: 31.05.2002 DE 10224052
(43) Veröffentlichungstag der Anmeldung: 03.12.2003
(73) Patentinhaber: ROBERT BOSCH GMBH, 70442 Stuttgart (DE)
(72) Erfinder: Lamm, Hubert, 77876 Kappelrodeck (DE); Haderer, Guenter, 77815 Buehl (DE)

(56) Entgegenhaltungen:
- WO-A-01/56142
- US-B1- 6 219 599
- US-B1- 6 283 543
- US-B1- 6 315 355

## Beschreibung

### Stand der Technik

Die Erfindung betrifft ein Verfahren und eine Vorrichtung zum Öffnen und Schließen einer Öffnung mittels eines an einem Fahrzeug angeordneten beweglichen Teils nach der Gattung der unabhängigen Ansprüche.

Mit der DE 196 15 123 A1 ist eine Vorrichtung zur elektronischen Überwachung eines in einem Fahrzeug angeordneten Verstellantriebs bekannt geworden, bei der ein Grenzwert einer Einklemmschutzvorrichtung mittels eines Tachosignals korrigiert wird. Bei hohen Fahrzeuggeschwindigkeiten wirken auf die verstellbaren Teile wie z.B. der Seitenscheibe oder des Schiebedachdeckels durch die äußere Luftströmung hohe Kräfte, die ein Schließen dieser Teile bei aktiviertem Einklemmschutz nicht zulassen. Durch das Heraufsetzen des Grenzwertes der Schließkraftbegrenzung in Abhängigkeit des Tachosignals kann erreicht werden, dass das Schiebedach auch bei hohen Geschwindigkeiten und aktiviertem Einklemmschutz geschlossen werden kann. Wird jedoch auf das Fahrzeug eine Dachbox montiert, so wirkt auf den Schiebedachdeckel auch bei geringeren Geschwindigkeiten durch die zusätzliche Sogwirkung eine solch starke Kraft, dass das Schiebedach bei aktiviertem Einklemmschutz bei höheren Geschwindigkeiten nicht mehr geschlossen werden kann.

### Vorteile der Erfindung

Das erfindungsgemäße Verfahren mit den kennzeichnenden Merkmalen des Anspruch 1 hat den Vorteil, dass Öffnungen am Fahrzeug bei aktiviertem Einklemmschutz auch dann noch zuverlässig geschlossen werden können, wenn am Äußeren des Fahrzeugs zusätzliche Objekte montiert wurden, die die Schließkraft der beweglichen Teile besonders bei hohen Fahrzeuggeschwindigkeiten beeinflussen. Hierzu wird der Steuereinheit mit der Auswerteelektronik ein zusätzliches Signal zugeführt, das die Gegenwart und/oder Art eines am Fahrzeug angebauten Objekts anzeigt.

Durch die in den Unteransprüchen aufgeführten Merkmale sind vorteilhafte Weiterbildungen des Verfahrens nach Anspruch 1 möglich. Wird für die Schließkraftbegrenzung ein oberer Grenzwert festgelegt, bei dessen Überschreiten das Teil gestoppt oder reversiert wird, ist es von Vorteil, diesen Grenzwert in Abhängigkeit des Signals, das ein am Fahrzeug montiertes Objekt anzeigt, korrigiert wird. Dabei kann der Grenzwert derart variiert werden, dass die zusätzliche Kraftwirkung durch das am Fahrzeug montierte Objekt ausgeglichen wird.

Eine weitere Möglichkeit für die Korrektur der Schließkraft liegt darin, für zuvor definierte Objekte entsprechende Grenzwerte der Schließkraft in einem Speicher zu hinterlegen. Ein solcher Grenzwert kann beispielsweise als maximale Schließkraft gegenüber dem Verstellweg abgespeichert werden.

Besonders günstig ist es, der Steuereinheit ein weiteres Signal zuzuführen, das die Fahrzeuggeschwindigkeit anzeigt.

Da die Sogwirkung der außen am Fahrzeug montierten Objekte stark von der Fahrzeuggeschwindigkeit abhängt, kann durch dieses Signal die Einklemmschutzfunktion weiter korrigiert werden.

Des weiteren ist es günstig, den Grenzwert in Abhängigkeit des Verstellwegs zu korrigieren, da die Schließkraft kurz vor dem vollständigen Schließen der Öffnung besonders stark ansteigt. Um ein zuverlässiges Schließen der Öffnung zu gewährleisten wird die Schwelle der Schließkraftbegrenzung in diesem Bereich stärker angehobene

Um ein Signal zu generieren, das ein am Fahrzeug angebautes Objekt anzeigt, sind außen am Fahrzeug ein oder mehrere Mikroschalter angeordnet, die bei der Montage des Objekts einen elektrischen Kontakt auslösen. Die Mikroschalter können beispielsweise an einer Dachreling angeordnet sein, wobei je nach Art des Objekts eine gewisse Kombination der Mikroschalter betätigt wird. Durch eine solche Codierung mittels Mikroschalter wird der Steuereinheit Information über den Typ eines Objekts zur Verfügung gestellt.

Des weiteren kann das am Fahrzeug montierte Objekt mittels eines Transponder berührungslos detektiert werden und das Signal ebenfalls berührungslos an die Steuereinheit weitergeleitet werden. Dies hat den Vorteil, dass keine Signalleitung vom Äußeren des Fahrzeugs zur Steuereinheit notwendig sind. Werden mehrere Signale für das Anzeigen des Objekts, beispielsweise durch mehrere Mikroschalter generiert, können diese Signale vorteilhaft über einen Datenbus an die Steuereinheit übermittelt werden.

Die erfindungsgemäße Vorrichtung zum Öffnen und Schließen einer Öffnung hat des weiteren den Vorteil, dass durch am Fahrzeug angeordnete Detektoren die Gegenwart eines montierten Objekts erkannt und insbesondere verschiedene Objekte differenziert werden können, und ein entsprechendes Signal der Einklemmschutzrichtung zugeführt werden kann. Dadurch werden zum einen die gesetzlichen Forderungen der Schließkraftbegrenzung erfüllt und trotzdem ein zuverlässiges Schließen der Öffnungen am Kraftfahrzeug garantiert. Von besonderer Bedeutung ist die erfindungsgemäße Vorrichtung für ein Schiebe-Hebedach das durch eine Dreh- oder Kippbewegung geschlossen wird. Hierbei wirkt die Sogwirkung eines beispielsweise auf einer Dachreling montierten Ski- oder Dachbox direkt entgegen der Schließrichtung. Mit der erfindungsgemäßen Vorrichtung wird jedoch auch bei einem solchen Schließkraftanstieg ein sicheres Schließen der Öffnung gewährleistet.

### Zeichnung

Ausführungsbeispiele der Erfindung sind in der nachfolgenden Beschreibung anhand der zugehörigen Zeichnungen näher erläutert. Es zeigen
Figur 1 eine erfindungsgemäße Vorrichtung mit einem Dachaufbau und
Figur 2 ein Schema des erfindungsgemäßen Verfahrens.

### Beschreibung der Ausführungsbeispiele

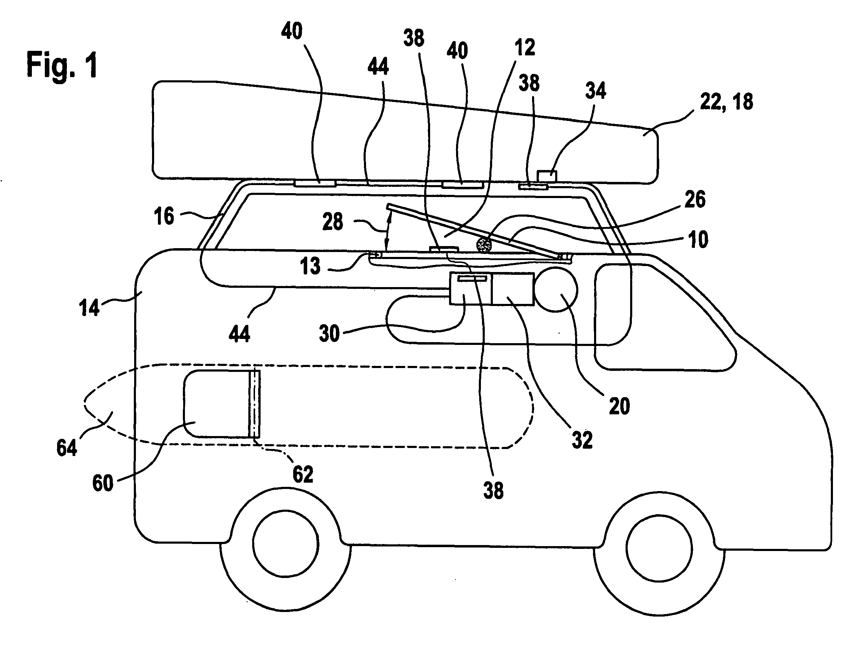

Figur 1 zeigt ein Fahrzeug, mit einer am Dach 14 angeordneten Dachreling 16. Auf der Dachreling 16 ist als Dachaufbau 18 eine Skibox 18 montiert, die des weiteren auch als ein außen am Fahrzeug montiertes Objekt 22 bezeichnet wird. Das Fahrzeugdach 14 weist eine Öffnung 12 auf, die mittels eines beweglich angeordneten Teils 10 geöffnet und geschlossen werden kann. Im Ausführungsbeispiel ist das Teil 10 als Deckel 10 eines Schiebehebedachs ausgeführt, der mittels einer Kipp- oder Drehbewegung durch einen Verstellantrieb 20 aufgestellt werden kann. Der Verstellantrieb 20 weist eine Steuereinheit 30 und eine Einklemmschutzvorrichtung 32 zur Detektion eines Hindernisses 26 im Verstellweg 28 des Teils 10 auf. Dabei wird eine Messgröße, die die Schließkraft repräsentiert, wie beispielsweise die Drehzahl, der Motorstrom oder das Drehmoment erfasst und von der Einklemmrichutzfunktion 32 ausgewertet. Wird beispielsweise durch das Über- oder Unterschreiten eines absoluten oder relativen Grenzwertes ein Einklemmfall erkannt, gibt die Steuereinheit 30 ein Signal an den Verstellantrieb 20, um denselben zu stoppen oder zu reversieren. Am Dachaufbau 18 ist beispielsweise an dessen Außenwand ein passiver oder aktiver Transponder 34 angeordnet, der ein Signal 36 aussendet, das die Gegenwart eines Objekts 22 anzeigt. Das Signal 36 wird von einer Antenne 38 empfangen, die beispielsweise in der Dachreling 16, in einer Dichtung 13 der Dachöffnung 12 oder direkt im Steuergerät 30 beziehungsweise in einem Elektronik-Dachmodul am Innenspiegelfuß angeordnet ist. Das Signal 36 beeinflusst die Einstellung des Grenzwerts der Einklemmschutzfunktion 32 in der Weise, dass in Abhängigkeit des am Fahrzeug montierten Objekts 22 der Grenzwert der Schließkraft entsprechend erhöht wird. Dazu werden beispielsweise Korrekturgrößen für den Grenzwert, die bei verschiedenen Dachaufbauten 18 gegenüber dem Verstellweg 24 des Teils 10 ermittelt wurden, in einem Speicher der Steuereinheit 30 hinterlegt.

In einer Variation des Ausführungsbeispiels wird das Signal 36, das ein Objekt 22 anzeigt, mittels einem oder mehreren Mikroschaltern 40 erzeugt, die am Fahrzeugdach 14 oder vorzugsweise an der Dachreling 16 angeordnet sind. Wird ein Dachaufbau 18 auf dem Fahrzeugdach 14 montiert, wird dabei ein Kontakt im Mikroschalter 40 erzeugt und das Signal 36 über Signalleitungen 42 an die Steuereinheit 30 weitergeleitet. Durch die Anordnung mehrerer Mikroschalter 40 werden bei unterschiedlichen Dachaufbauten 18 unterschiedliche Kombinationen der Mikroschalter 40 betätigt. Der dadurch erzeugte Code wird von der Steuereinheit 30 einem bestimmten Objekt 22 zugeordnet und der Grenzwert des Einklemmeschutzes entsprechend variiert. Die verschiedenen Mikroschalter 40 sind mit einem Bussystem 44, beispielsweise ein CAN oder VAN miteinander verbunden, so dass nur eine Signalleitung 42 zur Steuereinheit 32 notwendig ist.

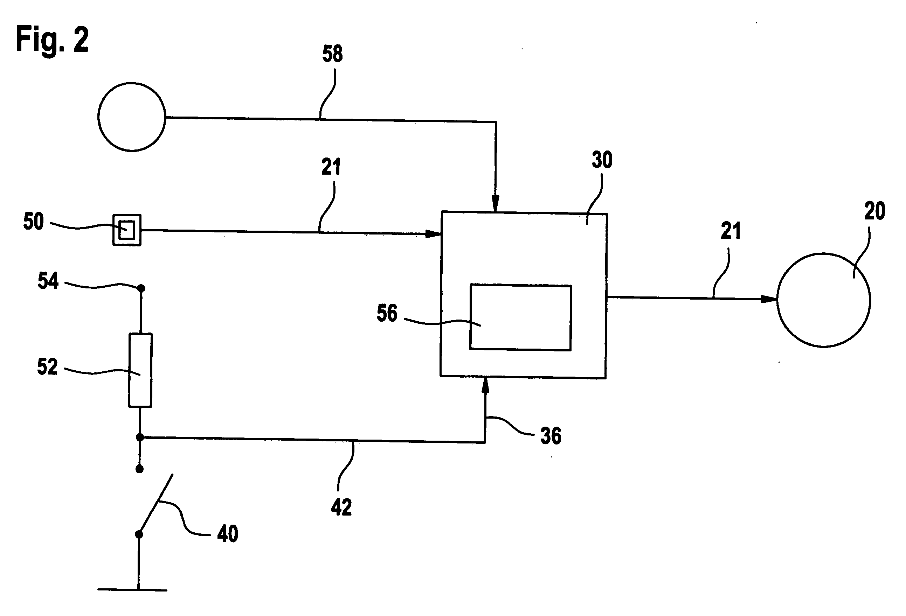

In Figur 2 ist ein erfindungsgemäßes Verfahren dargestellt, mit dem ein Verstellantrieb 20 zum Öffnen und Schließen einer Öffnung 12 im Kraftfahrzeug dargestellt ist. Die Steuereinheit 30 wird über eine Bedieneinheit 50 betätigt. Des weiteren wird der Steuereinheit 30 über eine Signalleitung 42 das Signal 36 zugeführt, das ein außen am Fahrzeug montiertes Objekt 22 repräsentiert. Das Signal 36 wird durch ein oder mehrere Mikroschalter 40 generiert, die über einen Widerstand 52 an einem Potential 54 anliegen. Das Signal 36 steht beispielsweise mit Betätigung der Motorzündung der Steuereinheit 30 zur Verfügung und initialisiert in einer Auswerteelektronik 56 der Steuereinheit 30 eine Korrekturwert, der dem identifizierten Objekt 22 entspricht. Die Auswerteelektronik 56 vergleicht beispielsweise nacheinander aufgenommene Messwerte, die eine Schließkraft repräsentieren und sendet beim Überschreiten eines Messwerts ein Signal 21 an den Verstellmotor 20, um diesen zu stoppen öder zu reversieren. Beim Schließen des Teils 10 steigt die Schließkraft in Abhängigkeit des Verstellwegs 28 durch die äußere Luftströmung an, so dass auch die Korrektur des Grenzwerts durch das Signal 36 vom Verstellweg 28 abhängt. Der Grenzwert wird hier beispielsweise durch eine bestimmte Schließkraftdifferenz pro Verstellweg definiert. Zusätzlich wird der Steuereinheit 30 ein weiteres Signal 58 zugeführt, das die Fahrzeuggeschwindigkeit angibt und beispielsweise aus einem Tachosignal gewonnen wird. Das Signal 58 wird zusammen mit dem Signal 36 in der Auswerteelektronik 56 verarbeitet, um so die maximal erlaubte Schließkraft bzw. Schließkraftänderung in Abhängigkeit des Verstellwegs 28 zu bestimmen. Somit wird erreicht, dass das Teil 10 auch bei montiertem Dachaufbau 18 und hohen Geschwindigkeiten zuverlässig geschlossen werden kann.

In einem weiteren Ausführungsbeispiel wird das erfindungsgemäße Verfahren auf ein seitliches Kippfenster 60 angewendet, das um eine vertikale Achse 62 dreh- oder kippbar ist über dem beispielsweise als Objekt 22 seitlich am Fahrzeug, beispielsweise einem Wohnmobil, ein Surfbrett zum Transport befestigt wird. Ein solches seitlich am Fahrzeug montiertes Objekt 22, 64 wird ebenfalls mittels Mikroschaltern 40 oder eines Transponders 34 detektiert und ein Signal 36 der Steuereinheit 30 eines Seitenfenster-Antriebs 20 zugeführt. Das Verfahren ist ebenso auf verschiebbare Teile 10 anwendbar, da durch die Sogwirkung zwischen dem Teil 10 und dem Objekt 22 die Reibkräfte zum Verstellen des Teils 10 zunehmen, wodurch die Schließkraft beim Schließen der Öffnung ebenfalls ansteigt. Als weitere Objekte 22, die am Fahrzeug montiert werden können, sind auch Fahrradständer, verschiedenste Dachboxen, Spoiler, Werbeflächen oder sonstige Anbauten vorstellbar.

Das Verfahren ist nicht auf eine indirekte Einklemmschutzvorrichtung beschränkt, sondern känn beispielweise auch für Einklemmschutzvorrichtungen verwendet werden, bei denen die Schließkraft direkt mittels einer Einklemmleiste oder eines sonstigen Sensors direkt detektiert wird. Hierbei wird der Steuereinheit 30 ebenfalls ein Signal 36, das ein Objekt 23 anzeigt, zugeführt, um die Einklemmschutzfunktion zu korrigieren.

## Patentansprüche

1. Verfahren zum Öffnen und Schließen einer Öffnung (12) mittels eines an einem Fahrzeug angeordneten beweglichen Teils (10), mit einem Verstellantrieb (20) und einer Steuereinheit (30), wobei beim Schließen und/oder Öffnen der Öffnung (12) ein Hindernis (26) erkannt wird, das sich im Verstellweg (28) des Teils (10) befindet und ein Signal (21) an die Steuereinheit (30) weitergeleitet wird, um die Bewegung des Teils (10) zu stoppen oder zu reversieren, **dadurch gekennzeichnet, dass** der Steuereinheit (30) mindestens ein weiteres Signal (36) zugeführt wird, das ein außen am Fahrzeug angebautes Objekt (22) anzeigt.

2. Verfahren nach Anspruch 1, **dadurch gekennzeichnet, dass** zur Erkennung eines Hindernisses (26) ein Grenzwert bereitgestellt wird, bei dessen Über- oder Unterschreiten die Bewegung des Teils (10) gestoppt oder reversiert wird, und dass der Grenzwert in Abhängigkeit des das Objekt (22) anzeigenden Signals (36) bestimmt wird.

3. Verfahren nach Anspruch 2, **dadurch gekennzeichnet, dass** der Grenzwert in Abhängigkeit des Verstellweges (28) korrigiert wird.

4. Verfahren nach einem der vorhergehenden Ansprüche, **dadurch gekennzeichnet, dass** für vorbestimmte Objekte (22) abgespeicherte Grenzwert/Verstellweg-Kurven hinterlegt werden.

5. Verfahren nach einem der vorhergehenden Ansprüche, **dadurch gekennzeichnet, dass** der Steuereinheit (30) ein zusätzliches Signal (58) der Fahrzeuggeschwindigkeit zugeführt wird, das insbesondere den Grenzwert korrigiert.

6. Verfahren nach einem der vorhergehenden Ansprüche, **dadurch gekennzeichnet, dass** das Signal (36) des Objekts (22) durch einen oder mehrere Mikroschalter (40) generiert wird.

7. Verfahren nach einem der vorhergehenden Ansprüche, **dadurch gekennzeichnet, dass** das Signal (36) des Objekts (22) berührungslos mittels eines Transponders (34) generiert wird.

8. Verfahren nach einem der vorhergehenden Ansprüche, **dadurch gekennzeichnet, dass** das Signal (36) des Objekts (22) mittels eines Daten-Bus (44) an die Steuereinheit (30) weitergeleitet wird.

9. Vorrichtung zum Öffnen und Schließen einer Öffnung (12) mittels eines an einem Fahrzeug - insbesondere dreh- oder kippbar - angeordneten beweglichen Teils (10), mit einem Verstellantrieb (20), einer Steuereinheit (30) und einer Einklemmschutzvorrichtung (32), die ein Hindernis (26) im Verstellweg (28) des Teils (10) erkennt, **dadurch gekennzeichnet, dass** Mittel zur Detektion (40, 34, 38) eines außen am Fahrzeug angebauten Objekts (22) angeordnet sind, die ein das Objekt (22) repräsentierendes Signal (36) an die Einklemmschutzvorrichtung (32) weiterleiten.

10. Vorrichtung nach Anspruch 9, **dadurch gekennzeichnet, dass** die Öffnung (12) eine Dachöffnung (12) und das Objekt (22) ein Dachaufbau (18), insbesondere ein auf einer Dachreling (16) montierte Dachbox (18) ist.

11. Vorrichtung nach einem der Ansprüche 9 oder 10, **dadurch gekennzeichnet, dass** unterschiedliche, montierte Objekte (22), wie beispielsweise Fahrradständer oder Dachboxen verschiedener Abmessungen, unterschiedliche Korrekturen der Einklemmschutzvorrichtung (32) auslösen.

## Claims

1. Method for opening and closing an opening (12) by means of a moving part (10) which is arranged on a vehicle, having an adjusting drive (20) and a control unit (30), with an obstruction (26) which is in the adjustment path (28) of the part (10) being detected and a signal (21) being forwarded to the control unit (30) in order to stop or reverse the movement of the part (10) when the opening (12) is closed and/or opened, **characterized in that** at least one further signal (36), which indicates an object (22) which is attached to the outside of the vehicle, is supplied to the control unit (30).

2. Method according to Claim 1, **characterized in that** a limit value is provided for the purpose of detecting an obstruction (26), with the movement of the part (10) being stopped or reversed when the said limit value is exceeded or undershot, and **in that** the limit value is determined as a function of the signal (36) which indicates the object (22).

3. Method according to Claim 2, **characterized in that** the limit value is corrected as a function of the adjustment path (28).

4. Method according to one of the preceding claims, **characterized in that** stored limit value/adjustment path curves are stored for predetermined objects (22).

5. Method according to one of the preceding claims, **characterized in that** an additional signal (58) for the vehicle speed is supplied to the control unit (30), this additional signal in particular correcting the limit value.

6. Method according to one of the preceding claims, **characterized in that** the signal (36) for the object (22) is generated by one or more microswitches (40).

7. Method according to one of the preceding claims, **characterized in that** the signal (36) for the object (22) is generated in a contactless fashion by means of a transponder (34).

8. Method according to one of the preceding claims, **characterized in that** the signal (36) for the object (22) is forwarded to the control unit (30) by means of a data bus (44).

9. Apparatus for opening and closing an opening (12) by means of a moving part (10) which is arranged on a vehicle - in particular in a rotatable or tiltable fashion -, having an adjusting drive (20), a control unit (30) and an anti-trapping apparatus (32) which detects an obstruction (26) in the adjustment path (28) of the part (10), **characterized in that** means for detecting (40, 34, 38) an object (22) which is attached to the outside of the vehicle are provided, which means forward a signal (36) which represents the object (22) to the anti-trapping apparatus (32).

10. Apparatus according to Claim 9, **characterized in that** the opening (12) is a roof opening (12) and the object (22) is a roof structure (18), in particular a roof box (18) which is mounted on a roof railing (16).

11. Apparatus according to one of Claims 9 or 10, **characterized in that** different, mounted objects (22), for example bicycle stands or roof boxes of different dimensions, trigger different corrections of the anti-trapping apparatus (32).

## Revendications

1. Procédé pour ouvrir et fermer une ouverture (12) au moyen d'une partie mobile (10) disposée sur un véhicule, avec un entraînement de réglage (20) et une unité de commande (30), selon lequel, lors de l'ouverture et/ou de la fermeture de l'ouverture (12), on identifie un obstacle (26) dans le trajet de réglage (28) de la partie (10) et on transmet un signal (21) à l'unité de commande (30) pour arrêter ou inverser le mouvement de la partie (10),
**caractérisé en ce qu'**
on transmet à l'unité de commande (30) au moins un autre signal (36), qui indique un objet (22) monté à l'extérieur sur le véhicule.

2. Procédé selon la revendication 1,
**caractérisé en ce que**
pour l'identification d'un obstacle (26), on établit une valeur limite dont le franchissement vers le haut ou vers le bas provoque l'arrêt ou l'inversion du mouvement de la partie (10), et on détermine la valeur limite en fonction du signal (36) indiquant l'objet (22).

3. Procédé selon la revendication 2,
**caractérisé en ce qu'**
on corrige la valeur limite en fonction du trajet de réglage (28).

4. Procédé selon l'une quelconque des revendications précédentes,
**caractérisé en ce qu'**
on mémorise des courbes valeur limite/trajet de réglage enregistrées pour des objets prédéterminés (22).

5. Procédé selon l'une quelconque des revendications précédentes,
**caractérisé en ce qu'**
on envoie à l'unité de commande (30) un signal supplémentaire (58) de la vitesse du véhicule, qui corrige notamment la valeur limite.

6. Procédé selon l'une quelconque des revendications précédentes,
**caractérisé en ce qu'**
on génère le signal (36) de l'objet (22) au moyen d'un ou de plusieurs micro-interrupteurs (40).

7. Procédé selon l'une quelconque des revendications précédentes,
**caractérisé en ce qu'**
on génère le signal (36) de l'objet (22) sans contact au moyen d'un transpondeur (34).

8. Procédé selon l'une quelconque des revendications précédentes,
**caractérisé en ce qu'**
on transmet le signal (36) de l'objet (22) à l'unité de commande (30) au moyen d'un bus de données (44).

9. Dispositif pour ouvrir et fermer une ouverture (12) au moyen d'une partie mobile (10) - en particulier rotative ou pivotante - disposée sur un véhicule, avec un entraînement de réglage (20), une unité de commande (30) et un dispositif de protection contre le coincement (32), qui identifie un obstacle (26) dans le trajet de réglage (28) de la partie (10),
**caractérisé en ce qu'**
il comporte des moyens pour la détection (40, 34, 38) d'un objet (22) monté à l'extérieur sur le véhicule, et qui transmettent un signal (36) représentant l'objet (22) au dispositif de protection contre le coincement (32).

10. Dispositif selon la revendication 9,
**caractérisé en ce que**
l'ouverture (12) est une ouverture de toit (12) et l'objet (22) est une structure de toit (18), en particulier un coffre de toit (18) placé sur une rampe de toit (16).

11. Dispositif selon l'une quelconque des revendications 9 ou 10,
**caractérisé en ce que**
différents objets montés (22), comme par exemple des bicyclettes ou des coffres de toit de différentes dimensions, déclenchent différentes corrections du dispositif de protection contre le coincement (32).
